(19) Europäisches Patentamt
European Patent Office
Office européen des brevets

(11) **EP 3 855 344 B1**

(12) **EUROPEAN PATENT SPECIFICATION**

(45) Date of publication and mention
of the grant of the patent:
**26.06.2024 Bulletin 2024/26**

(21) Application number: **19862778.8**

(22) Date of filing: **17.09.2019**

(51) International Patent Classification (IPC):
***G06V 20/58*** *(2022.01)*

(52) Cooperative Patent Classification (CPC):
**G06V 20/588**

(86) International application number:
**PCT/CN2019/106105**

(87) International publication number:
**WO 2020/057485 (26.03.2020 Gazette 2020/13)**

(54) **METHOD AND DEVICE FOR DETERMINING ANALYSIS REGION FOR LANE DETECTION**

VERFAHREN UND VORRICHTUNG ZUR BESTIMMUNG EINES ANALYSEBEREICHS ZUR FAHRSPURERKENNUNG

PROCÉDÉ ET DISPOSITIF POUR DÉTERMINER UNE RÉGION D'ANALYSE POUR UNE DÉTECTION DE VOIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.09.2018 CN 201811084084**

(43) Date of publication of application:
**28.07.2021 Bulletin 2021/30**

(73) Proprietor: **Great Wall Motor Company Limited Baoding, Hebei 071000 (CN)**

(72) Inventor: **MIYAHARA, Shunji Baoding, Hebei 071000 (CN)**

(74) Representative: **Ström & Gulliksson AB P.O. Box 793 220 07 Lund (SE)**

(56) References cited:
EP-A2- 2 759 959     CN-A- 104 102 905
CN-A- 107 330 376     CN-A- 108 470 142

• XUN PAN ET AL: "Fast Road Detection Based on a Dual-Stage Structure", COMPUTER AND AUTOMATION ENGINEERING, ACM, 2 PENN PLAZA, SUITE 701 NEW YORK NY 10121-0701 USA, 18 February 2017 (2017-02-18), pages 155-162, XP058339006, DOI: 10.1145/3057039.3057101 ISBN: 978-1-4503-4809-6
• RODRÍGUEZ-GARAVITO C H ET AL: "Stereo Road Detection Based on Ground Plane", 17 December 2015 (2015-12-17), ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 748 - 7, XP047336627, ISBN: 978-3-642-17318-9 [retrieved on 2015-12-17] * the whole document *
• MARCOS NIETO ET AL: "Stabilization of Inverse Perspective Mapping Images based on Robust Vanishing Point Estimation", INTELLIGENT VEHICLES SYMPOSIUM, 2007 IEEE, IEEE, PI, 1 June 2007 (2007-06-01), pages 315-320, XP031126963, ISBN: 978-1-4244-1067-5

- JIANG RUYI ET AL: "Lane detection and tracking using a new lane model and distance transform", MACHINE VISION AND APPLICATIONS, SPRINGER, BERLIN, DE, vol. 22, no. 4, 19 January 2011 (2011-01-19), pages 721-737, XP019916774, ISSN: 1432-1769, DOI: 10.1007/S00138-010-0307-7

# EP 3 855 344 B1

**Description**

**Field**

The present disclosure relates to the fields of intelligent transportation and image processing, in particular to a method and device for determining an analysis area in lane detection.

**Background**

At present, vehicles with an autonomous driving (AD) function or advanced driver assistance system (ADAS) have been gradually introduced to the market, thereby greatly promoting the development of intelligent transportation. For the AD/ADAS, lane detection is very important, which is an important condition for the AD/ADAS to perform determination.

In the prior art, the AD/ADAS may be supported by a radar, a visual camera (hereinafter referred to as a camera), a laser radar, an ultrasonic sensor and the like to perform lane detection. The camera is most widely used because it can achieve two-dimensional image information as same as human vision. However, when lane detection is conducted by the camera, although an image about the lane may be captured successfully, the captured image includes various information about the detection object and environment, which is numerous and is not all related to the lane detection. Therefore, in the process of lane detection, if all the information is considered in the image processing, a lot of time consumption and unnecessary calculation will be generated, affecting the detection efficiency.

**Summary**

In view of this, an objective of the present disclosure is to provide a method of determining an analysis area in lane detection, so as to solve the problem that image processing in the lane detection is cumbersome.

To achieve the above objective, the technical solution of the present disclosure is implemented as follows:
a method of determining an analysis area in lane detection is provided, wherein the lane detection includes: performing image processing of a camera image captured by a camera on a vehicle, and the analysis area is an area in the camera image that is confined to perform the image processing, and the method includes: establishing a road coordinate system; establishing a camera coordinate system; determining a relative relation between the road coordinate system and the camera coordinate system, wherein the relative relation includes a lateral shift of the camera relative to a center of the lane and an angle between a vehicle direction and a lane direction, where it is assumed that the vehicle direction and an azimuth angle of the camera are the same; determining a first domain in the camera coordinate system, wherein the first domain requires that the lane be covered when the lateral shift and the angle are present; and converting the first domain to the analysis area in the camera image based on the camera coordinate system.

Further, determining a relative relation between the road coordinate system and the camera coordinate system comprises: integrating the road coordinate system and the camera coordinate system into the same coordinate system on the basis of a road surface, and obtaining a lateral movement value or a rotation value of the camera coordinate system with respect to the road coordinate system, determining the lateral shift based on the lateral movement value, and determining the angle based on the rotation value.

Further, determining a first domain in the camera coordinate system comprises: determining the lateral shift and the angle, determining a boundary parameter of the first domain such that the first domain satisfies the determined lateral shift and the determined angle, and constructing the first domain based on the determined boundary parameter.

Further, determining the lateral shift and the angle comprises: determining the lateral shift is one quarter of the lane width, and the angle-is the half of the vehicle angle against the lane when doing the lane change.

Further, the first domain is adaptively changeable over time.

Compared with the prior art, the method of determining the analysis area in the lane detection provided by the present disclosure has the following advantages: the embodiment of the present disclosure achieves theoretical determination of the analysis area to which image processing is applied in lane detection, thereby eliminating calculation and processing on unnecessary image areas, accelerating the lane detection and inhibiting noise in a differential image, thereby realizing more reliable lane detection.

Another objective of the present disclosure is to provide a machine readable storage medium, and an device for determining an analysis area in lane detection, so as to solve the problem that image processing in the lane detection is cumbersome.

To achieve the above objective, the technical solution of the present disclosure is implemented as follows:
a machine readable storage medium is provided, wherein the machine readable storage medium stores instructions for causing a controller to perform the above method of determining the analysis area in the lane detection.

An device for determining an analysis area in lane detection is provided, wherein the lane detection includes:

performing image processing of a camera image captured by a camera on a vehicle, and the analysis area is an area in the camera image that is confined to perform the image processing, and the device includes: a first coordinate system establishing module, configured to establish a road coordinate system; a second coordinate system establishing module, configured to establish a camera coordinate system; a relative relation determining module, configured to determine a relative relation between the road coordinate system and the camera coordinate system, wherein the relative relation includes a lateral shift of the camera relative to a center of the lane and an angle between a vehicle direction and a lane direction, where it is assumed that the vehicle direction and the azimuth angle of the camera are the same; a domain determining module, configured to determine a first domain in the camera coordinate system, wherein the first domain requires that the lane be covered when the lateral shift and the angle are present; and a domain conversion module, configured to convert the first domain to the analysis area in the camera image based on the camera coordinate system.

The machine readable storage medium, and the device for determining the analysis area in the lane detection have the same advantages as those of the above method of determining the analysis area in the lane detection compared with the prior art, which will not be elaborated herein.

Further, the relative relation determining module is configured to determine a relative relation between the road coordinate system and the camera coordinate system comprises: integrating the road coordinate system and the camera coordinate system into the same coordinate on the basis of a road surface, and obtaining a lateral movement value or a rotation value of the camera coordinate system with respect to the road coordinate system, determining the lateral shift based on the lateral movement value, and determining the angle based on the rotation value.

Further, the domain determining module is configured to determine a first domain in the camera coordinate comprises: determining the lateral shift and the angle, determining a boundary parameter of the first domain such that the first domain satisfies the determined lateral shift and the determined angles, and constructing the first domain based on the determined boundary parameter.

Further, determining the lateral shift and the angle comprises: determining the lateral shift is one quarter of the lane width, and determining the angle is the half of the vehicle angle against the lane when doing the lane change.

The machine readable storage medium and the device for determining the analysis area in the lane detection have the same advantages as the above method for determining the analysis area in the lane detection over the prior art, and will not be repeated here.

Other features and advantages of the present disclosure will be described in detail in the following specific embodiments.

**Brief Description of Drawings**

The accompanying drawings constituting a part of the present disclosure are used to provide further understanding of the present disclosure. The exemplary embodiments of the present disclosure and the descriptions thereof are used to explain the present disclosure and do not constitute an improper limitation to the present disclosure. In the accompanying drawings:

FIG. 1 is a schematic flowchart of conventional lane detection;
FIG. 2 is a schematic diagram of a traditional analysis area;
FIG. 3 is a schematic flowchart of a method of determining an analysis area in lane detection according to an embodiment of the present disclosure;
FIG. 4 is a schematic diagram of a road coordinate system when z=0 according to an embodiment of the present disclosure;
FIG. 5 is a schematic diagram of a camera coordinate system according to an embodiment of the present disclosure;
FIG. 6 (a) to FIG. 6 (c) are coordinate systems formed after a road coordinate system and a camera coordinate system are integrated, wherein in FIG. 6 (b) and FIG. 6 (c), z=0 and $z_c$=0;
FIG. 7 is a schematic diagram of a first domain according to an embodiment of the present disclosure;
FIG. 8 is a schematic diagram of a first domain determined based on a boundary condition in Table 3;
FIG. 9 is a schematic diagram of a first domain determined based on a boundary condition in Table 4;
FIG. 10 is a schematic diagram of an analysis area in a camera image corresponding to the first domain in FIG. 8;
FIG. 11 is a schematic diagram of the analysis area determined by the method according to an embodiment of the present disclosure in an example;
FIG. 12 (a) and FIG. 12 (b) are schematic diagrams of adaptive change of an analysis area according to an embodiment of the present disclosure; and
FIG. 13 is a structural schematic diagram of an device for determining an analysis area in lane detection according to an embodiment of the present disclosure.

Description of reference numerals:

110 first coordinate system establishing module;
120 second coordinate system establishing module;
130 relative relation determining module;
140 domain determining module;
150 domain conversion module.

**Detailed Description of the Embodiments**

It should be noted that, in case of no conflict, embodiments of the present disclosure and features in the embodiments may be combined with each other.

The present disclosure will be described in detail below with reference to the accompanying drawings and the embodiments.

An embodiment of the present disclosure provides a method of determining an analysis area in lane detection. The definition of the analysis area is described herein with reference to a lane detection process.

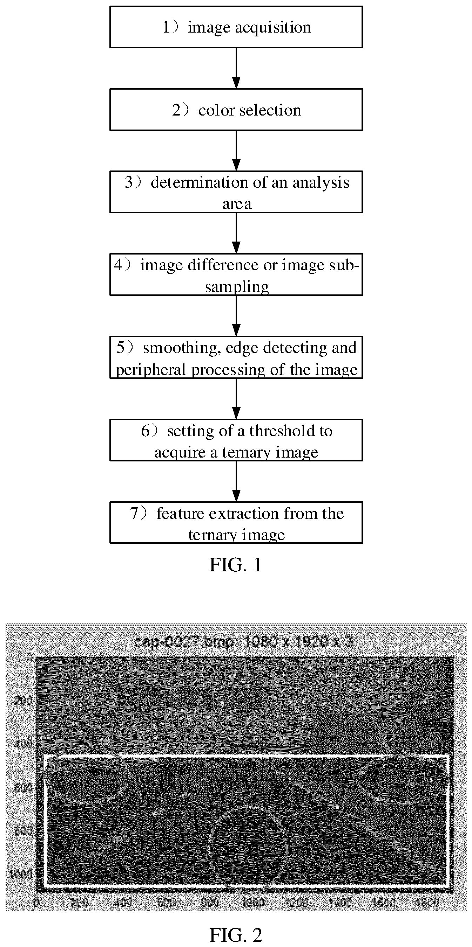

FIG. 1 is a schematic flowchart of conventional lane detection. As shown in FIG. 1, the conventional lane detection generally includes the following steps: 1) image acquisition; 2) color selection; 3) determination of an analysis area; 4) image difference or image sub-sampling; 5) smoothing, edge detecting (Sobel) and peripheral processing of the image; 6) setting of a threshold to acquire a ternary image; and 7) feature extraction from the ternary image, including edge processing, Hough transformation, lane estimation and the like.

Here, these steps are conventional in the field of lane detection and may be performed with reference to the prior art, and the embodiment of the present disclosure mainly focuses on the step 3), so that the specific implementation detail of other steps are not elaborated herein.

In the step 1), the image acquisition includes: an image with a lane in front of a vehicle is captured through a camera on the vehicle, wherein the image is referred to herein as a camera image. The analysis area determined in the step 3) refers to an area where the image processing involved in the subsequent steps is applied in the camera image. Obviously, determination of the analysis area is beneficial to avoiding unnecessary image pixel calculation, but there is no theoretical solution to determine the analysis area, which is selected by a relative value of the camera image in vertical and horizontal directions. FIG. 2 is a schematic diagram of a traditional analysis area. A further analysis area is determined by a ratio of the analysis area in vertical and horizontal directions specified in Table 1 and the camera specifications in Table 2.

Table 1 Ratio of analysis area

| Ratio | Numerical value |
|---|---|
| Vertical area rm1 | 0.5 |
| Vertical area rm2 | 0.9 |
| Horizontal area rn1 | 0.2 |
| Horizontal area rn2 | 0.8 |

Table 2 Camera specifications

| Item | Specification | Unit |
|---|---|---|
| Pixel | 1920× 1080 | |
| Horizontal direction FOV | 12.2 | deg |
| Vertical direction FOV | 6.2~6.8 | deg |
| Horizontal pixel in 20 cm of 150 m | 12 | Pixel |
| Vertical pixel in 20 cm of 150 m | 12.7 | Pixel |
| Focal distance | 100 | Meter (m) |

(continued)

| Item | Specification | Unit |
|---|---|---|
| Signal | HDMI-RGB | |

Combined with Table 1 and Table 2, the analysis area is:
Vertical area: 540 (=1080*rm1) to 972 (=1080*rm2)
Horizontal area: 384 (=1920*rn1) to 1536 (=1920*rn2)

A single traditional analysis area is shown as a rectangular box in FIG. 2. However, the traditional analysis area shown in FIG. 2 obviously includes unnecessary parts (unrelated to lane detection), such as the parts circled by the circles in FIG. 2. These unnecessary parts may lead to unnecessary calculation, sometimes even lead to misrecognition of the lane. Accordingly, the embodiment of the present disclosure provides the above method of determining the analysis area in the lane detection.

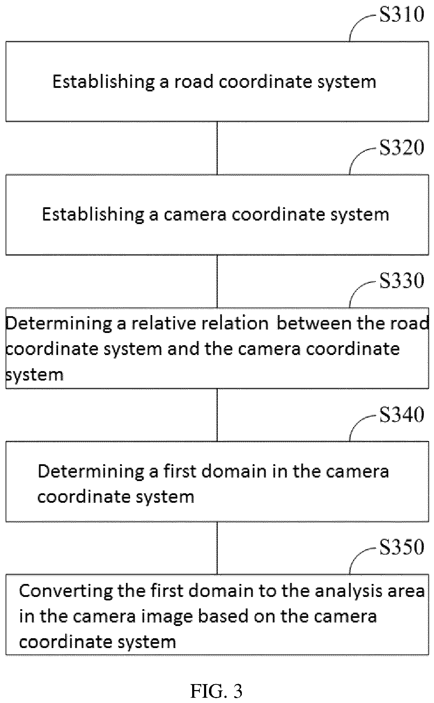

FIG. 3 is a schematic flowchart of a method of determining an analysis area in lane detection according to an embodiment of the present disclosure. As described above, the lane detection includes: performing image processing of a camera image captured by a camera on a vehicle, and the analysis area is an area in the camera image that is confined to perform the image processing. As shown in FIG. 3, the method may include the following steps:
Step S310: establish a road coordinate system.

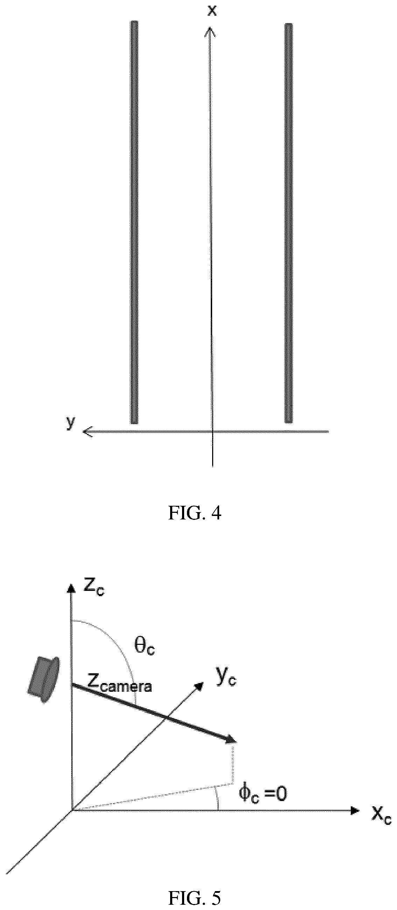

The road coordinate system is a world coordinate system, and preferably takes a lane direction as an x axis, a direction vertical to the x axis and a road surface as a z axis and a direction vertical to the x axis and the z axis as a y axis; and an original point may be located in the center of the lane, so that two lanes may be symmetrical along the x axis. FIG. 4 is a schematic diagram of a road coordinate system when z=0 according to an embodiment of the present disclosure, wherein two straight lines parallel to the x axis represent lane.

Step S320: establish a camera coordinate system.

FIG. 5 is a schematic diagram of a camera coordinate system according to an embodiment of the present disclosure, wherein the camera coordinate system may be established on the basis of a vehicle, and preferably takes a vehicle traveling direction as an $x_c$ axis, a direction vertical to the $x_c$ axis and a vehicle body as a $z_c$ axis and a direction vertical to the $x_c$ axis and the $z_c$ axis as a $y_c$ axis. The coordinates of the camera position are (0, 0, $z_{camera}$), wherein the $z_{camera}$ is the height of the camera relative to the position on the vehicle as the original point of the camera coordinate system. $\varphi_c$ is an azimuth angle and is 0 in the figure, and $\theta_c$ is an elevation angle. The camera is essentially a converter from an actual 3D field to a 2D image surface. The acquired camera image will be changed by adjusting the angle and position of the camera, that is, parameters $z_{camera}$, $\varphi_c$, $\theta_c$, etc.

Step S330: determine a relative relation between the road coordinate system and the camera coordinate system.

Wherein, the relative relation includes a lateral shift of the camera relative to the center of the lane and an angle between a vehicle direction and a lane direction. Here, the vehicle direction is as same as a direction indicated by the azimuth angle of the camera.

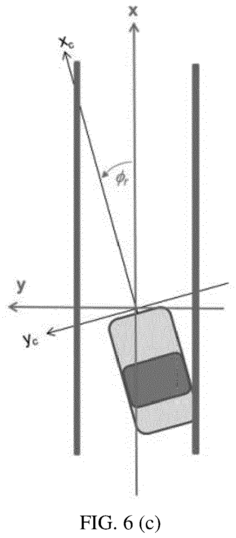

In a preferred embodiment, determine the relative relation includes: integrate the road coordinate system and the camera coordinate system into the same coordinate system on the basis of a road surface, and obtain a lateral movement value or a rotation value of the camera coordinate system with respect to the road coordinate system, determine the lateral shift based on the lateral movement value, and determine the angle based on the rotation value. The lateral shift and the angle are the relative relation that needs to be determined and are respectively set as $y_r$ and $\varphi_r$. When the two coordinate systems are integrated based on the road surface, the road coordinate system (the world coordinate system) is fixed, the camera coordinate system will move/rotate relative to the road coordinate system based on the $y_r$ and $\varphi_r$ as the vehicle changes the lane. The movement/rotation is essentially the lateral shift of the camera relative to the center of the lane and the angle of the vehicle direction relative to the lane direction (referring to FIG. 6 (c) and FIG. 6 (c)), that is, the above lateral movement value is the lateral shift and the rotation value is the angle. It should be noted that the longitudinal movement of the two coordinate systems is ignored here.

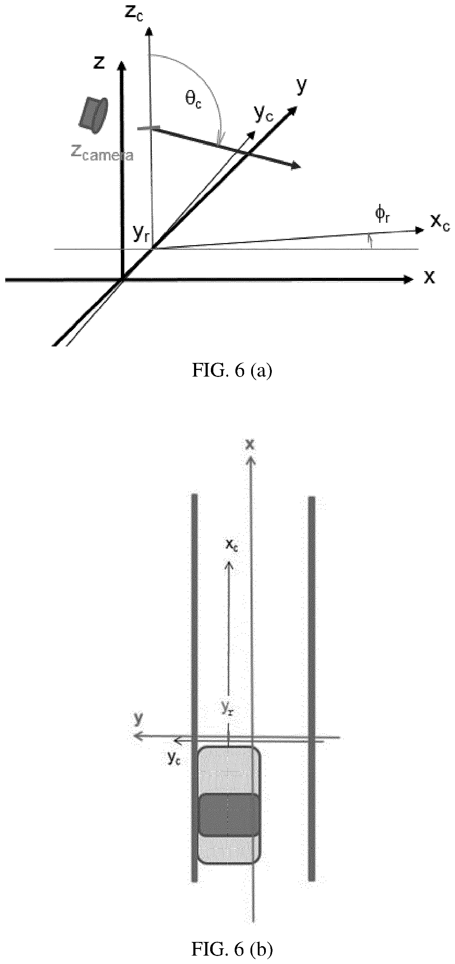

FIG. 6 (a) to FIG. 6 (c) are coordinate systems formed after a road coordinate system and a camera coordinate system are integrated, wherein in FIG. 6 (b) and FIG. 6 (c), z=0 and $z_c$=0; In FIG. 6 (a), the camera position is (0, 0, $z_{camera}$), the direction ($\theta_c$, $\varphi_c$) is equal to ($\theta_c$, 0), and it is assumed that the x axis has little influence, in FIG. 6 (b), relative to FIG. 6 (a), the camera generates a lateral shift $y_r$ relative to the center of the lane, and in FIG. 6 (c), relative to FIG. 6 (a) and FIG. 6 (b), the vehicle deflects, and an angle $\varphi_r$ is formed between the vehicle direction and the lane direction.

Step S340: determine a first domain is in the camera coordinate system.

Wherein, the first domain requires that the lane be covered when the lateral shift and the angle are present.

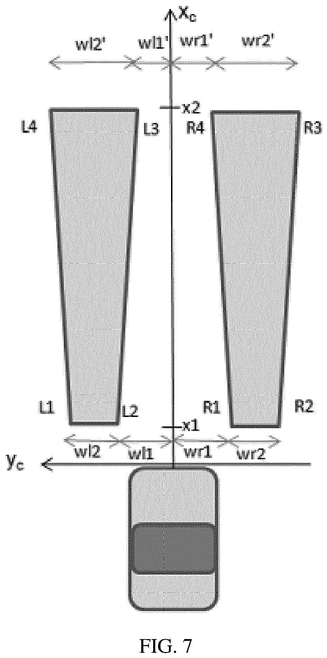

FIG. 7 is a schematic diagram of a first domain according to an embodiment of the present disclosure. In the figure, $z_c$=0. As shown in FIG. 7, in a preferred embodiment, for the two corresponding lanes along the center line of the lane, the first domain is determined as two areas which are symmetrical along the $x_c$ axis, and each area covers one lane. As the vehicle runs, the relative relation of the road coordinate system and the camera coordinate system is changed, as above, that is, the camera coordinate system moves/rotates relative to the road coordinate system based on the lateral shift $y_r$ and the angle $\varphi_r$, and the first domain must ensure that even if the relative relation of the road coordinate system and the camera coordinate system is changed, the lane can be covered.

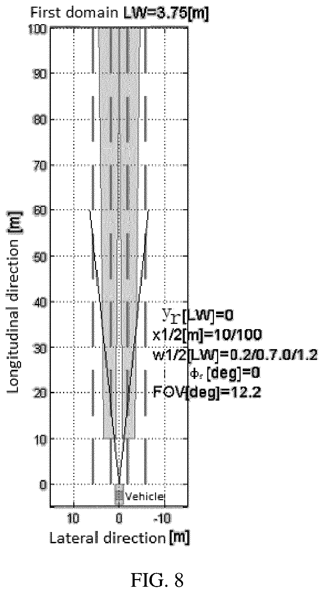

In this way, considering how the first domain covers the lane, it is necessary to define boundary conditions of the first domain, that is, to define boundary parameters such as wl1, wl2, L1, L2 and the like in FIG. 7. For example, Table 3 shows a group of boundary conditions. FIG. 8 is a schematic diagram of a first domain determined based on a boundary condition in Table 3. In FIG. 8, $y_r$=0, $\varphi_r$=0, a field of view (FOV) of the camera is, for example, 12.2 deg.

Table 3 Boundary condition of the first domain

| Lane width (m) | 3.75 |
| --- | --- |
| Parameter | Domain 1 |
| x1 (m) | 10 |
| x2 (m) | 100 |
| wl1, wr1 (LW) | 0.2 |
| Wl2, wr2 (LW) | 0.7 |
| wl1', wr1' (LW) | 0 |
| Wl2', wr2' (LW) | 1.2 |

The LW (Lane Width) represents the width of the lane, the parameters in the table such as x1, x2 and wl1 are configured corresponding to the lane width, and the meanings expressed by the parameters may be clearly understood with reference to FIG. 7, which are not elaborated herein. It should be noted that x1 is generally not taken as 0 because the camera is generally mounted at a rearview mirror of the vehicle and the camera cannot see a short driving distance in front of the vehicle due to the visual angle, for example, 10 m. therefore, x1 is, for example, taken as 10 m.

In a preferred embodiment, since whether the first domain can cover the lane is relevant to the lateral shift and the angle, the determination of the first domain may include: determining the lateral shift and the angle, determining a boundary parameter of the first domain such that the first domain satisfies the determined lateral shift and the determined angle, and constructing the first domain based on the determined boundary parameter .

In a more preferred embodiment, the determination of the lateral shift and the angle includes: the lateral shift is determined to be one quarter of the lane width, and the angle is determined to be the half of the vehicle angle against the lane when doing the lane change. Here, it may be determined from the current rotating velocity, the lateral velocity, etc. of the vehicle that the half of the vehicle angle against the lane is about 2 deg when doing the lane change, that is, the angle is about 2 deg. For example, in Table 3, the lane width is 3.75 m. When the vehicle changes the lane, the lateral velocity is about 1.4 m/s at 80 km/h and the corresponding current angle is about 2 deg, then it may be determined that the lateral shift $y_r$ is 3.75/4 and the angle $\varphi_r$ is 1 deg. Here, for the current angle and the determined angle $\varphi_r$, 2 deg and 1 deg are taken as examples below. In this way, to make the first domain cover the lane, the conditions required to be met are: the lateral shift of LW/4 and the angle $\varphi_r$ of 1 deg. Through the application to the actual road, when the lane detection reaches 150 m, the lateral shift of LW/4 and the angle $\varphi_r$ of 1 deg are sufficient, and when the lane detection focuses on short distance (for example, <50m), adaptive adjustment may be performed.

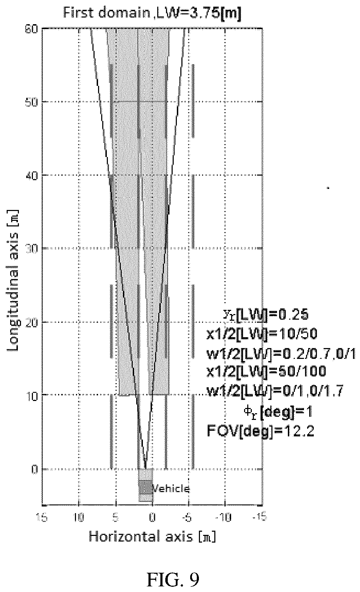

With reference to the example in Table 3, Table 4 shows the boundary condition of two first domain meeting the condition, and FIG. 9 is a schematic diagram of the first domain determined based on the boundary condition in Table 4. In the figure, $y_r$=LW/4, $\varphi_r$=1 deg, and FOV, for example, is 12.2 deg.

Table 4 Boundary condition of the first domain

| Lane Width (LW, m) | 3.75 | |
| --- | --- | --- |
| Parameter | Domain 1 | Domain 2 |
| x1 (m) | 10 | 50 |
| x2 (m) | 50 | 100 |
| wl1, wr1 (LW) | 0.2 | 0 |
| Wl1, wr2 (LW) | 0.7 | 1 |

(continued)

| Lane Width (LW, m) | 3.75 | |
|---|---|---|
| Parameter | Domain 1 | Domain 2 |
| wl1', wr1' (LW) | 0 | 0 |
| Wl2', wr2' (LW) | 1.2 | 1.7 |

x1 and x2 of the domain 1 and the domain 2 are respectively 10m to 50 m and 50 m to 100 m, which indicates that the lane detection may reach 100 m, and the reason for not detecting 10 m in front of the vehicle is as above that the camera cannot see the short distance in front of the vehicle.

Step S350: convert the first domain to the analysis area in the camera image based on the camera coordinate system.

In the embodiment of the present disclosure, the coordinates on the camera coordinate system established based on the physical position of the camera may be converted into the coordinates in the corresponding camera image through conversion parameters such as a rotation matrix, a camera internal reference matrix and the like. Here, the coordinate conversion between the camera coordinate system and the corresponding camera image is already an existing mature technology, which will not be elaborated herein.

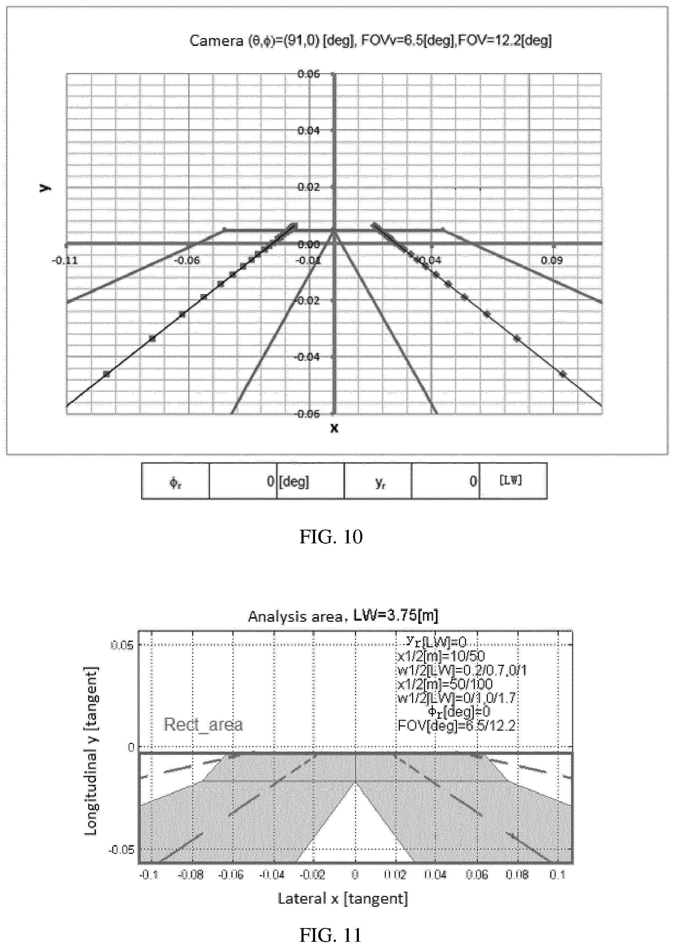

Taking the first domain in FIG. 8 as an example, FIG. 10 is a schematic diagram of an analysis area in a camera image corresponding to the first domain in FIG. 8, wherein L1 and L2 are lanes and are covered with a left domain and a right domain respectively.

The following will undertake the examples in FIG. 1 and FIG. 2 to further describe some details and advantages of performing lane detection based on the analysis area determined by the embodiment of the present disclosure.

The example specifically includes the process of the following parts:

a) according to the process shown in FIG. 1, the step 1) and step 2) are performed to acquire an image and perform color selection.

b) in the step 3), the analysis area is determined by the method according to the embodiment of the present disclosure.

Compared with the traditional analysis area shown in FIG. 2, FIG. 11 is a schematic diagram of the analysis area determined by the method according to an embodiment of the present disclosure. In the figure, Rect area represents a box where the traditional analysis area is located, and a shadow filled area in the Rect_area is the analysis area finally determined by the method according to the embodiment of the present disclosure. It can be seen that all unnecessary areas in FIG. 2 are not included in the newly determined analysis area.

c) For the analysis area shown in FIG. 11, the step 4) and step 5) are continuously performed.

Here, taking the differential image as an example, the calculation of the differential image in the analysis area will be easier. Specifically, it is supposed that the differential image in the Rect_area is DDD0(m, n) and the analysis area image in the Rect_area is AAA(m, n), if there is an analysis area in the Rect_area, the DDD0(m, n) is 1, otherwise the DDD0(m, n) is 0, and the AAA and the DDD0 respectively represent multiplication of corresponding pixels, that is:

$$DDD(m, n)=DDD0(m, n)*AAA(m, n) \qquad (1)$$

The DDD(m, n) is the finally acquired differential image, and it can be known that the DDD(m, n) does not include those areas outside the analysis area.

Understandably, the calculation of other image processing in the step 4) to step (5) in the analysis area will be easier.

d) A ternary image is acquired and processed.

Specifically, through the step 6), the ternary image may be acquired by applying a threshold to the DDD(m, n). The ternary image may include important information (important differential points) because the ternary image covers the analysis area. Unnecessary points in the equation (1) are eliminated. Image processing involved in the step 7) may be defined in the analysis area for processing, and a good lane estimation result may be obtained.

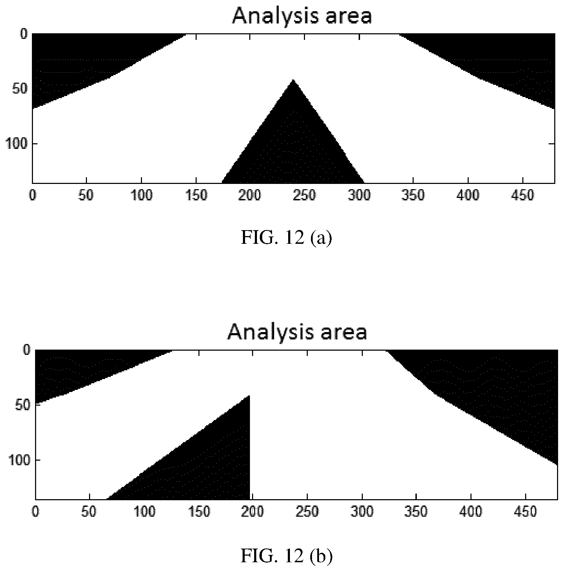

In addition, in a preferred embodiment, the first domain in the example may adaptively change over time, for example, the first domain in this measurement may be changed according to the lane position measured last time along with time change. For example, if the vehicle moves rightwards from the lane center, the first domain may be changed to the left to keep the lane in the analysis area. In a similar way, if the vehicle direction inclines to the right, the first domain may be changed to the left side. The analysis area in the finally formed camera image will change correspondingly to ensure the coverage of the lane, as shown in FIG. 12 (a) and FIG. 12 (b). FIG. 12 (a) is a schematic diagram of the analysis area when the vehicle is located in the lane center, and the white part in the figure represents the analysis area. FIG. 12 (b) is a schematic diagram of the analysis area correspondingly obtained by changing the first domain to the left after the vehicle moves from the lane center to the right, and it can be known that the analysis area is also changed to the left.

In conclusion, the embodiment of the present disclosure achieves theoretical determination of the analysis area where image processing is applied in lane detection, thereby eliminating calculation and processing on unnecessary image areas, accelerating the lane detection and inhibiting noise in a differential image, thereby realizing more reliable lane detection. Through verification on the actual road surface, it is proved that by the method provided by the embodiment of the present disclosure, the speed and the precision of the lane detection can be improved.

Another embodiment of the present disclosure further provides a machine readable storage medium, wherein the machine readable storage medium stores instructions for causing a controller to perform the method of determining the analysis area in the lane detection described in the above embodiment.

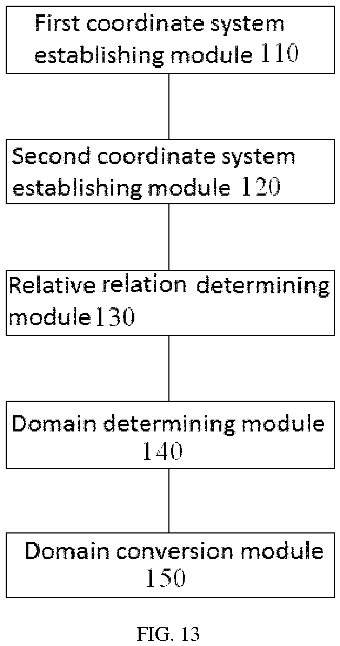

Another embodiment of the present disclosure further provides an device for determining an analysis area in lane detection, which has the invention ideal as same as that of the method of determining the analysis area in the lane detection described in the above embodiment. FIG. 13 is a structural schematic diagram of an device for determining an analysis area in lane detection according to an embodiment of the present disclosure, wherein the lane detection includes: performing image processing of a camera image captured by a camera on a vehicle, and the analysis area is an area in the camera image that is confined to perform the image processing. Referring to FIG. 13, the device includes: a first coordinate system establishing module 110, configured to establish a road coordinate system; a second coordinate system establishing module 120, configured to establish a camera coordinate system; a relative relation determining module 130, configured to determine a relative relation between the road coordinate system and the camera coordinate system, wherein the relative relation includes a lateral shift of the camera relative to a center of the lane and an angle between a vehicle direction and a lane direction; a domain determining module 140, configured to determine a first domain in the camera coordinate system, wherein the first domain requires that the lane be covered when the lateral shift and the angle are present; and a domain conversion module 150, configured to convert the first domain to the analysis area in the camera image based on the camera coordinate system.

In a preferred embodiment, the relative relation determining module 130 is configured to determine the relative relation between the road coordinate system and the camera coordinate system, which may include: integrating the road coordinate system and the camera coordinate system into the same coordinate on the basis of a road surface, and obtaining a lateral movement value or a rotation value of the camera coordinate system with respect to the road coordinate system, determining the lateral shift based on the lateral movement value, and determining the angle based on the rotation value.

In a preferred embodiment, the domain determining module 140 is configured to determine the first domain in the camera coordinate system, which may include: determining the lateral shift and the angle, determining a boundary parameter of the first domain such that the first domain satisfies the determined lateral shift and the determined angles, and constructing the first domain based on the determined boundary parameter. More preferably, the determination of the lateral shift and the angle may include: the lateral shift is determined to be one quarter of the lane width, and the angle is determined to be the half of the vehicle angle against the lane when doing the lane change.

Here, the details and advantages of the specific embodiments of the device according to the embodiment of the present disclosure are as same as or similar to the above method of determining the analysis area in the lane detection, which will not be elaborated herein.

Those skilled in the art may understand that implementing of all or some of steps in the methods of the foregoing embodiments may be completed by instructing relevant hardware through a program. The program is stored in a storage medium and includes a plurality of instructions for enabling a single chip, a chip or a processor to perform all or some of steps in the method of each embodiment of the present application. The foregoing storage medium includes: various medium that may store program codes, such as a USB flash disk, a mobile hard disk, a read-only memory (ROM), a random access memory (RAM), a magnetic disk, or an optical disc.

In addition, various different embodiments of the embodiments of the present disclosure may be combined arbitrarily, which should be regarded as the contents disclosed by the embodiments of the present disclosure, as long as they do not violate the idea of the embodiments of the present disclosure.

**Claims**

1. A method of determining an analysis area in lane detection, wherein the lane detection comprises performing image processing of a camera image captured by a camera on a vehicle, and the analysis area is an area in the camera image that is confined to perform the image processing, and the method includes:

establishing a road coordinate system, and the road coordinate system is a world coordinate system in which a lane direction is an x-axis, a direction perpendicular to the x-axis and perpendicular to a road surface is a z-axis, and a direction perpendicular to both the x-axis and the z-axis is a y-axis, wherein an origin point of the world coordinate system is located in a center of a lane;

establishing a camera coordinate system, wherein the camera coordinate system takes a vehicle traveling direction as an $x_c$ axis, a direction vertical to the $x_c$ axis and a vehicle body as a $z_c$ axis and a direction vertical to the $x_c$ axis and the $z_c$ axis as a $y_c$ axis, and the coordinates on the camera coordinate system can be converted to the coordinates in the camera image;

determining a relative relation between the road coordinate system and the camera coordinate system, wherein the relative relation comprises a lateral shift of the camera relative to a center of the lane and an angle between a vehicle direction and a lane direction, where it is assumed that the vehicle direction and an azimuth angle of the camera are the same;

determining a first domain in the camera coordinate system, wherein in the case of $z_c=0$, for the two lanes along the center line of the lane, the first domain is determined as two areas which are symmetrical along the $x_c$ axis, and each area covers one lane, wherein the lateral shift is one quarter of a known lane width and the angle-is the half of the vehicle angle against the lane when doing the lane change, so that the first domain maintains coverage of the corresponding lane in the event of changes in relative relation; and

converting the coordinates of the first domain in the camera coordinate system to the coordinates in the camera image, and forming the analysis area based on the converted coordinates.

2. The method of claim 1, wherein determining a relative relation between the road coordinate system and the camera coordinate system comprises:
integrating the road coordinate system and the camera coordinate system into the same coordinate system on the basis of a road surface, and obtaining a lateral movement value or a rotation value of the camera coordinate system with respect to the road coordinate system, determining the lateral shift based on the lateral movement value, and determining the angle based on the rotation value.

3. The method of claim 1, wherein the first domain can be changed to keep the lane in the analysis area.

4. A machine readable storage medium which stores instructions for causing a controller to perform the method of any one of claims 1 to 3.

5. A device for determining an analysis area in lane detection, wherein the lane detection comprises performing image processing of a camera image captured by a camera on a vehicle, and the analysis area is an area in the camera image that is confined to perform the image processing, and the device includes:

a first coordinate system establishing module, configured to establish a road coordinate system, and the road coordinate system is a world coordinate system in which a lane direction is an x-axis, a direction perpendicular to the x-axis and perpendicular to a road surface is a z-axis, and a direction perpendicular to both the x-axis and the z-axis is a y-axis, wherein the origin point of the world coordinate system is located in a center of a lane;

a second coordinate system establishing module, configured to establish a camera coordinate system, wherein the camera coordinate system takes a vehicle traveling direction as an $x_c$ axis, a direction vertical to the $x_c$ axis and a vehicle body as a $z_c$ axis and a direction vertical to the $x_c$ axis and the $z_c$ axis as a $y_c$ axis, and the coordinates on the camera coordinate system can be converted to the coordinates in the camera image;

a relative relation determining module, configured to determine a relative relation between the road coordinate system and the camera coordinate system, wherein the relative relation comprises a lateral shift of the camera relative to a center of the lane and an angle between a vehicle direction and a lane direction, where it is assumed that the vehicle direction and the azimuth angle of the camera are the same;

a domain determining module, configured to:

determine a first domain in the camera coordinate system, wherein in the case of $z_c=0$, for the two lanes along the center line of the lane, the first domain is determined as two areas which are symmetrical along the $x_c$ axis, and each area covers one lane, wherein the lateral shift is one quarter of a known lane width and the angle-is the half of the vehicle angle against the lane when doing the lane change, so that the first domain maintains coverage of the corresponding lane in the event of changes in relative relation; and

a domain conversion module, configured to convert the coordinates of the first domain in the camera coordinate system to the coordinates in the camera image, and forming the analysis area based on the converted coordinates.

6. The device of claim 5, wherein the relative relation determining module is configured to determine a relative relation between the road coordinate system and the camera coordinate system comprises:
integrating the road coordinate system and the camera coordinate system into the same coordinate system on the basis of a road surface, and obtaining a lateral movement value or a rotation value of the camera coordinate system with respect to the road coordinate system, determining the lateral shift based on the lateral movement value, and determining the angle based on the rotation value.

**Patentansprüche**

1. Verfahren zum Bestimmen eines Analysebereichs bei der Fahrspurerkennung, wobei die Fahrspurerkennung die Durchführung einer Bildverarbeitung eines von einer Kamera an einem Fahrzeug aufgenommenen Kamerabildes umfasst und der Analysebereich ein Bereich in dem Kamerabild ist, der auf die Durchführung der Bildverarbeitung beschränkt ist, und das Verfahren umfasst:

Erstellen eines Straßenkoordinatensystems, und das Straßenkoordinatensystem ist ein Weltkoordinatensystem, in dem eine Fahrbahnrichtung eine x-Achse ist, eine Richtung senkrecht zu der x-Achse und senkrecht zu einer Straßenoberfläche eine z-Achse ist, und eine Richtung senkrecht zu sowohl der x-Achse als auch der z-Achse eine y-Achse ist, wobei sich ein Ursprungspunkt des Weltkoordinatensystems in einer Mitte einer Fahrspur befindet;
Erstellen eines Kamerakoordinatensystems, wobei das Kamerakoordinatensystem eine Fahrzeugfahrtrichtung als eine $x_c$-Achse, eine Richtung senkrecht zu der $x_c$-Achse und einer Fahrzeugkarosserie als eine $z_c$-Achse und eine Richtung senkrecht zu der $x_c$-Achse und der $z_c$-Achse als eine $y_c$-Achse heranzieht und die Koordinaten in dem Kamerakoordinatensystem in die Koordinaten im Kamerabild umgewandelt werden können;
Bestimmen einer Relativbeziehung zwischen dem Straßenkoordinatensystem und dem Kamerakoordinatensystem, wobei die Relativbeziehung eine seitliche Verschiebung der Kamera relativ zu einer Mitte der Fahrbahn und einen Winkel zwischen einer Fahrzeugrichtung und einer Fahrbahnrichtung umfasst, wobei angenommen wird, dass die Fahrzeugrichtung und ein Azimutwinkel der Kamera gleich sind,
Bestimmen einer ersten Domäne in dem Kamerakoordinatensystem, wobei in dem Fall von $z_c$=0 für die beiden Fahrspuren entlang der Mittellinie der Fahrspur die erste Domäne als zwei Bereiche bestimmt wird, die entlang der $x_c$-Achse symmetrisch sind, und jeder Bereich eine Fahrspur abdeckt, wobei die seitliche Verschiebung ein Viertel einer bekannten Fahrspurbreite ist und der Winkel die Hälfte des Fahrzeugwinkels gegen die Fahrspur ist, wenn der Fahrspurwechsel durchgeführt wird, so dass die erste Domäne die Abdeckung der entsprechenden Fahrspur im Falle von Änderungen der Relativbeziehung beibehält; und
Umwandeln der Koordinaten des ersten Bereichs in dem Kamerakoordinatensystem in die Koordinaten in dem Kamerabild und Bilden des Analysebereichs auf Grundlage der umgewandelten Koordinaten.

2. Verfahren nach Anspruch 1, wobei das Bestimmen einer Relativbeziehung zwischen dem Straßenkoordinatensystem und dem Kamerakoordinatensystem umfasst:
Integrieren des Straßenkoordinatensystems und des Kamerakoordinatensystems in dasselbe Koordinatensystem auf Grundlage einer Straßenoberfläche, und Erlangen eines Seitenbewegungswerts oder eines Rotationswertes des Kamerakoordinatensystems in Bezug auf das Straßenkoordinatensystem, Bestimmen der Seitenverschiebung auf Grundlage des Seitenbewegungswerts, und Bestimmen des Winkels auf Grundlage des Rotationswerts.

3. Verfahren nach Anspruch 1, wobei die erste Domäne geändert werden kann, um die Fahrspur in dem Analysebereich zu halten.

4. Maschinenlesbares Speichermedium, das Befehle speichert, um einen Controller zu veranlassen, das Verfahren nach einem der Ansprüche 1 bis 3 durchzuführen.

5. Vorrichtung zum Bestimmen eines Analysebereichs bei der Fahrspurerkennung, wobei die Fahrspurerkennung das Durchführen einer Bildverarbeitung eines Kamerabildes umfasst, das von einer Kamera an einem Fahrzeug aufgenommen wird, und der Analysebereich ein Bereich in dem Kamerabild ist, der begrenzt ist, um die Bildverarbeitung durchzuführen, und die Vorrichtung aufweist:

ein erstes Koordinatensystemerstellungsmodul, das zum Erstellen eines Straßenkoordinatensystems konfiguriert ist, und das Straßenkoordinatensystem ein Weltkoordinatensystem ist, in dem eine Fahrspurrichtung eine x-Achse ist, eine Richtung senkrecht zu der x-Achse und senkrecht zu einer Straßenoberfläche eine z-Achse ist, und eine Richtung senkrecht zu sowohl der x-Achse als auch der z-Achse eine y-Achse ist, wobei der Ursprungspunkt des Weltkoordinatensystems sich in einer Mitte einer Fahrspur befindet;

ein zweites Koordinatensystemerstellungsmodul, das zum Erstellen eines Kamerakoordinatensystem konfiguriert ist, wobei das Kamerakoordinatensystem eine Fahrzeugfahrtrichtung als $x_c$-Achse, eine Richtung senkrecht zur $x_c$-Achse und eine Fahrzeugkarosserie als $z_c$-Achse und eine Richtung senkrecht zur $x_c$-Achse und zur $z_c$-Achse als $y_c$-Achse heranzieht, und die Koordinaten auf dem Kamerakoordinatensystem in die Koordinaten im Kamerabild umgewandelt werden können;

ein Relativbeziehungsbestimmungsmodul, das konfiguriert ist, um eine Relativbeziehung zwischen dem Straßenkoordinatensystem und dem Kamerakoordinatensystem zu bestimmen, wobei die Relativbeziehung eine Seitenverschiebung der Kamera relativ zu einer Mitte der Fahrbahn und einen Winkel zwischen einer Fahrzeugrichtung und einer Fahrbahnrichtung umfasst, wobei angenommen wird, dass die Fahrzeugrichtung und der Azimutwinkel der Kamera gleich sind,

ein Domänenbestimmungsmodul, das konfiguriert ist, um:

einen ersten Bereich in dem Kamerakoordinatensystem zu bestimmen, wobei in dem Fall von $z_c$=0 für die beiden Fahrspuren entlang der Mittellinie der Fahrspur der erste Bereich als zwei Bereiche bestimmt wird, die entlang der $x_c$-Achse symmetrisch sind, und jeder Bereich eine Fahrspur abdeckt, wobei die Seitenverschiebung ein Viertel einer bekannten Fahrspurbreite ist und der Winkel die Hälfte des Fahrzeugwinkels gegen die Fahrspur ist, wenn der Fahrspurwechsel durchgeführt wird, so dass der erste Bereich die Abdeckung der entsprechenden Fahrspur im Fall von Änderungen der Relativbeziehung beibehält; und

ein Domänenumwandlungsmodul, das konfiguriert ist, um die Koordinaten der ersten Domäne in dem Kamerakoordinatensystem in die Koordinaten im Kamerabild umzuwandeln, und das den Analysebereich auf der Grundlage der umgewandelten Koordinaten bildet.

6. Vorrichtung nach Anspruch 5, wobei das Relativbeziehungsbestimmungsmodul konfiguriert ist, um eine Relativbeziehung zwischen dem Straßenkoordinatensystem und dem Kamerakoordinatensystem zu bestimmen, aufweisend: Integrieren des Straßenkoordinatensystems und des Kamerakoordinatensystems in dasselbe Koordinatensystem auf Grundlage einer Straßenoberfläche, und Erlangen eines Seitenbewegungswerts oder eines Rotationswertes des Kamerakoordinatensystems in Bezug auf das Straßenkoordinatensystem, Bestimmen der Seitenverschiebung auf Grundlage des Seitenbewegungswerts, und Bestimmen des Winkels auf Grundlage des Rotationswerts.

## Revendications

1. Procédé de détermination d'une zone d'analyse dans une détection de voie, dans lequel la détection de voie comprend la réalisation d'un traitement d'image d'une image de caméra capturée par une caméra sur un véhicule, et la zone d'analyse est une zone dans l'image de caméra qui est confinée pour réaliser le traitement d'image, et le procédé comporte :

l'établissement d'un système de coordonnées de route, et le système de coordonnées de route est un système de coordonnées mondial dans lequel une direction de voie est un axe x, une direction perpendiculaire à l'axe x et perpendiculaire à une surface de route est un axe z, et une direction perpendiculaire à la fois à l'axe x et à l'axe z est un axe y, dans lequel un point d'origine du système de coordonnées mondial est situé dans un centre d'une voie ;

l'établissement d'un système de coordonnées de caméra, dans lequel le système de coordonnées de caméra prend une direction de déplacement de véhicule comme un axe $x_c$, une direction verticale à l'axe $x_c$ et à une carrosserie de véhicule comme un axe $z_c$ et une direction verticale à l'axe $x_c$ et à l'axe $z_c$ comme un axe $y_c$, et les coordonnées sur le système de coordonnées de caméra peuvent être converties en coordonnées dans l'image de caméra ;

la détermination d'une relation relative entre le système de coordonnées de route et le système de coordonnées de caméra, dans lequel la relation relative comprend un décalage latéral de la caméra par rapport à un centre de la voie et un angle entre une direction de véhicule et une direction de voie, où il est supposé que la direction de véhicule et un angle d'azimut de la caméra sont les mêmes ;

la détermination d'un premier domaine dans le système de coordonnées de caméra, dans lequel dans le cas de $z_c$ = 0, pour les deux voies le long de la ligne centrale de la voie, le premier domaine est déterminé comme deux zones qui sont symétriques le long de l'axe $x_c$, et chaque zone couvre une voie, dans lequel le décalage latéral est un quart d'une largeur de voie connue et l'angle est la moitié de l'angle de véhicule contre la voie lors du changement de voie, de sorte que le premier domaine maintienne une couverture de la voie correspondante en cas de changements dans la relation relative ; et

la conversion des coordonnées du premier domaine dans le système de coordonnées de caméra en coordonnées dans l'image de caméra, et la formation de la zone d'analyse sur la base des coordonnées converties.

2. Procédé selon la revendication 1, dans lequel la détermination d'une relation relative entre le système de coordonnées de route et le système de coordonnées de caméra comprend :
l'intégration du système de coordonnées de route et du système de coordonnées de caméra dans le même système de coordonnées sur la base d'une surface de route, et l'obtention d'une valeur de mouvement latéral ou d'une valeur de rotation du système de coordonnées de caméra par rapport au système de coordonnées de route, la détermination du décalage latéral sur la base de la valeur de mouvement latéral, et la détermination de l'angle sur la base de la valeur de rotation.

3. Procédé selon la revendication 1, dans lequel le premier domaine peut être modifié pour conserver la voie dans la zone d'analyse.

4. Support de stockage lisible par machine qui stocke des instructions destinées à amener un dispositif de commande à réaliser le procédé selon l'une quelconque des revendications 1 à 3.

5. Dispositif de détermination d'une zone d'analyse dans une détection de voie, dans lequel la détection de voie comprend la réalisation d'un traitement d'image d'une image de caméra capturée par une caméra sur un véhicule, et la zone d'analyse est une zone dans l'image de caméra qui est confinée pour réaliser le traitement d'image, et le dispositif comporte :

un premier module d'établissement de système de coordonnées, configuré pour établir un système de coordonnées de route, et le système de coordonnées de route est un système de coordonnées mondial dans lequel une direction de voie est un axe x, une direction perpendiculaire à l'axe x et perpendiculaire à une surface de route est un axe z, et une direction perpendiculaire à la fois à l'axe x et à l'axe z est un axe y, dans lequel le point d'origine du système de coordonnées mondial est situé dans un centre d'une voie ;
un second module d'établissement de système de coordonnées, configuré pour établir un système de coordonnées de caméra, dans lequel le système de coordonnées de caméra prend une direction de déplacement de véhicule comme un axe $x_c$, une direction verticale à l'axe $x_c$ et à une carrosserie de véhicule comme un axe $z_c$ et une direction verticale à l'axe $x_c$ et à l'axe $z_c$ comme un axe $y_c$, et les coordonnées sur le système de coordonnées de caméra peuvent être converties en coordonnées dans l'image de caméra ;
un module de détermination de relation relative, configuré pour déterminer une relation relative entre le système de coordonnées de route et le système de coordonnées de caméra, dans lequel la relation relative comprend un décalage latéral de la caméra par rapport à un centre de la voie et un angle entre une direction de véhicule et une direction de voie, où il est supposé que la direction de véhicule et l'angle d'azimut de la caméra sont les mêmes ;
un module de détermination de domaine, configuré pour :

déterminer un premier domaine dans le système de coordonnées de caméra, dans lequel dans le cas de $z_c = 0$, pour les deux voies le long de la ligne centrale de la voie, le premier domaine est déterminé comme deux zones qui sont symétriques le long de l'axe $x_c$, et chaque zone couvre une voie, dans lequel le décalage latéral est un quart d'une largeur de voie connue et l'angle est la moitié de l'angle de véhicule contre la voie lors du changement de voie, de sorte que le premier domaine maintienne une couverture de la voie correspondante en cas de changements dans la relation relative ; et
un module de conversion de domaine, configuré pour convertir les coordonnées du premier domaine dans le système de coordonnées de caméra en coordonnées dans l'image de caméra, et former la zone d'analyse sur la base des coordonnées converties.

6. Dispositif selon la revendication 5, dans lequel le module de détermination de relation relative est configuré pour déterminer une relation relative entre le système de coordonnées de route et le système de coordonnées de caméra comprend :
l'intégration du système de coordonnées de route et du système de coordonnées de caméra dans le même système de coordonnées sur la base d'une surface de route, et l'obtention d'une valeur de mouvement latéral ou d'une valeur de rotation du système de coordonnées de caméra par rapport au système de coordonnées de route, la détermination du décalage latéral sur la base de la valeur de mouvement latéral, et la détermination de l'angle sur la base de la valeur de rotation.

1）image acquisition

2）color selection

3）determination of an analysis area

4）image difference or image sub-sampling

5）smoothing, edge detecting and peripheral processing of the image

6）setting of a threshold to acquire a ternary image

7）feature extraction from the ternary image

FIG. 1

FIG. 2

S310

Establishing a road coordinate system

S320

Establishing a camera coordinate system

S330

Determining a relative relation between the road coordinate system and the camera coordinate system

S340

Determining a first domain in the camera coordinate system

S350

Converting the first domain to the analysis area in the camera image based on the camera coordinate system

FIG. 3

FIG. 4

FIG. 5

FIG. 6 (a)

FIG. 6 (b)

FIG. 6 (c)

FIG. 7

First domain LW=3.75[m]

$y_r$[LW]=0
x1/2[m]=10/100
w1/2[LW]=0.2/0.7.0/1.2
$\phi_z$ [deg]=0
FOV[deg]=12.2

Longitudinal direction [m]

Lateral direction [m]

Vehicle

FIG. 8

FIG. 9

Camera (θ,φ)=(91,0) [deg], FOVv=6.5[deg],FOV=12.2[deg]

| φr | 0 [deg] | yr | 0 | [LW] |
|---|---|---|---|---|

FIG. 10

Analysis area, LW=3.75[m]

Rect_area

yr[LW]=0
x1/2[m]=10/50
w1/2[LW]=0.2/0.7,0/1
x1/2[m]=50/100
w1/2[LW]=0/1,0/1.7
φr[deg]=0
FOV[deg]=6.5/12.2

Longitudinal y [tangent]

Lateral x [tangent]

FIG. 11

## Analysis area

FIG. 12 (a)

## Analysis area

FIG. 12 (b)

First coordinate system
establishing module 110

Second coordinate system
establishing module 120

Relative relation determining
module 130

Domain determining module
140

Domain conversion module
150

FIG. 13